# EUROPÄISCHE PATENTSCHRIFT

(11) **EP 0 756 343 B1**
(45) Veröffentlichungstag und Bekanntmachung des Hinweises auf die Patenterteilung: **03.03.1999**
(21) Anmeldenummer: 96110281.1
(22) Anmeldetag: 26.06.1996
(51) Int. Cl.: H01M 4/38, B22F 1/00

(54) **Legierungen für die Verwendung als aktives Material für die negative Elektrode einer alkalischen, wiederaufladbaren Nickel-Metallhydrid-Batterie und Verfahren zu ihrer Herstellung**
Alloys for use as active material for the negative electrode of an alkaline,rechargeable, nickel metal-hybride battery and its method of preparation
L'utilisation d'alliages comme masse active pour l'électrode négative d'une batterie alcaline secondaire au nickel-hydrure de métal et procédé de sa production

(30) Priorität: 27.07.1995 DE 19527505
(43) Veröffentlichungstag der Anmeldung: 29.01.1997
(73) Patentinhaber: VARTA Batterie Aktiengesellschaft, 30419 Hannover (DE)
(72) Erfinder: Lichtenberg, Frank, Dr., 67378 Zeiskam (DE)
(74) Vertreter: Kaiser, Dieter Ralf, Dipl.-Ing.

(56) Entgegenhaltungen:
- EP-A- 0 451 575
- EP-A- 0 609 609
- PATENT ABSTRACTS OF JAPAN vol. 016, no. 128 (C-0924), 2.April 1992 & JP-A-03 294444 (AGENCY OF IND SCIENCE & TECHNOL), 25.Dezember 1991,
- Europäisches Patentamt, EPODOC & CN-A-1124412 (BEIJING NONFERROUS METAL) 12 Juni 1996 XP002019155
- PATENT ABSTRACTS OF JAPAN vol. 013, no. 288 (E-781), 30.Juni 1989 & JP-A-01 072464 (TOSHIBA CORP), 17.März 1989,
- PATENT ABSTRACTS OF JAPAN vol. 018, no. 605 (M-1706), 17.November 1994 & JP-A-06 228613 (DAIDO STEEL CO LTD), 16.August 1994,

## Beschreibung

Die Erfindung betriffl eine Legierung für die Verwendung als aktives Material für die negative Elektrode einer alkalischen, wiederaufladbaren Nickel-Metallhydrid-Batterie sowie ein Verfahren zur Herstellung derselben.

Legierungen vom Typ AB₅, bei denen A einem oder mehreren der Elemente Ti, Zr, La, Ce, Pr und/oder Nd entspricht und B für Ni, gegebenenfalls in Kombination mit weiteren Elementen ausgewählt aus der Gruppe Co, Al, Mn, Cu, Cr, Fe und/oder V steht, sind in vielen verschiedenen chemischen Zusammensetzungen bekannt. Diese Legierungen lassen sich nach unterschiedlichen metallurgischen Verfahren herstellen. So sind aus dem Dokument EP-A 0271043 Legierungen, die der vorgenannten Zusammensetzung entsprechen und die als Elektrodenmaterial in alkalischen, wiederaufladbaren Nickel-Metallhydrid-Zellen verwendet werden, bekannt. Auch in dem Dokument T.SAKAI et. al., Zeitschrift für physikalische Chemie 183, Seite 333 - 346 (1994) wird über die Verwendung von Legierungen, die dem AB₅ - Typ entsprechen, als negatives Elektrodenmaterial in alkalischen, wiederaufladbaren Nickel-Metallhydrid-Zellen berichtet. Die experimentellen Daten der bekannten Legierungen weisen darauf hin, daß Kobalt als Legierungsbestandteil für eine hinreichend hohe Zyklenlebensdauer notwendig ist. Mit zunehmendem Co-Gehalt wächst die Zyklenlebensdauer. Im Gegensatz dazu nimmt die Belastbarkeit, insbesondere bei tiefen Temperaturen, d.h. im Bereich von -45 bis 0°C, mit zunehmendem Co-Gehalt ab. Kobalt ist zudem ein kostenintensiver, knapper Rohstoff, der erfahrungsgemäß starken Preisschwankungen unterliegt. Die bekannten Legierungen mit einem hohen Co-gehalt besitzen zwar eine hohe Kapazität und eine gute Zyklenstabilität bei Raumtemperaturen, jedoch ist eine Verbesserung ihrer Zyklenlebensdauer, insbesondere bei Hochtemperatur-Lagerung der Zellen, d.h. bei Temperaturen von ca. 45°C, wünschenswert.

Die Erfindung hat sich die Aufgabe gestellt, eine Legierung und ein Verfahren zu deren Herstellung anzugeben, die beim Einsatz als negatives Elektrodenmaterial in einer alkalischen, wiederaufladbaren Nickel-Metallhydrid-Zelle, der Zelle eine höhere Zyklenlebensdauer, insbesondere bei höheren Temperaturen, verleiht.

Die Aufgabe wird durch eine Legierung gelöst, wie sie in Anspruch 1 dargelegt ist. Für den Nickelanteil in der Legierung liegt v im Bereich von 3,2 ≤ v ≤ 4,4.

Als vorteilhaft haben sich Legierungen herausgestellt, die als Mischmetall Mm 25 - 60 Gew.-% La und 20 - 50 Gew.-% Ce sowie als Rest weitere Lanthanide enthalten. Bei gleichzeitiger Verwendung von Fe und Cu liegt das bevorzugte Verhältnis von Fe/Cu im Bereich 0,5 ≤ Fe/Cu ≤ 2. Bei gleichzeitigem Vorhandensein von Zr und Ti liegt das bevorzugte Verhältnis im Bereich von 2 ≤Zr/Ti ≤ 3.

Besonders vorteilhaft sind Legierungen, die die Zusammensetzung Mm_{0,97}Zr_{0,03}Ni₄Co_{0,3}Al_{0.4}Mn_{0,3} oder Mm_{0,97}Ti_{0,03}Ni₄Co_{0.3}Al_{0,4}Mn_{0,3} haben.

Die erfindungsgemäßen Legierungen weisen eine besonders gute Hochtemperatur-Zyklenstabilität in alkalischen, wiederaufladbaren Nickel-Metallhydrid-Zellen auf, wenn die geschmolzenen Legierungen sprühverdüst, anschließend getempert und danach gemahlen werden. Durch das Mahlen wird die Kugelform aufgebrochen und damit der elektrische Kontakt der Partikel in der Elektrode verbessert, die Masseausnutzung erhöht und gleichzeitig die Kapazität gesteigert.

Die Erfindung wird nachfolgend beispielhaft erläutert, wobei
- Figur 1,: die 1C-Zyklenlebensdauer bei 21°C für Vergleichsbeispiele 1 a) - c);

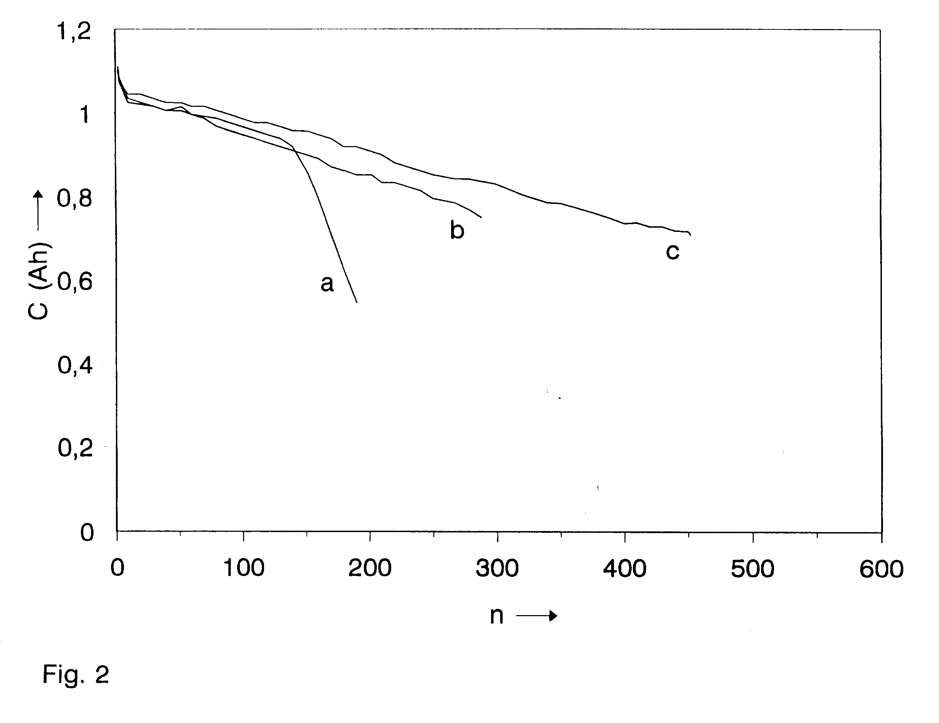

- Figur 2,: die 1C-Zyklenlebensdauer bei 45°C für Vergleichsbeispiele 1 a) - c);
- Figur 3,: die 1C-Zyklenlebensdauer bei 21°C A) - D) und
- Figur 4,: die 1C-Zyklenlebensdauer bei 45°C gegenüber den Vergleichsbeispielen 2 e), f) gemäß Anmeldung EP-A 736 919
darstellt.

### Vergleichsbeispiel 1 a), b) und c)

Die Legierungen der Zusammensetzung Mm Ni_{4,3-x} COₓ Al_{0,4} Mn_{0,3}, wobei für das Beispiel a) x=0,3, für das Beispiel b) x=0,5 und für das Beispiel c) x=0,7 ist, wurden auf konventionelle Weise hergestellt, d.h. im Induktionsofen erschmolzen, abgegossen und zu Pulver zermahlen. Das Röntgen-Beugungsspektrum einer Pulverprobe zeigt nur solche Peaks, die einem AB₅-Strukturtyp zugeordnet werden können. Diese Materialien sind daher als einphasig zu bezeichnen. Nahezu unabhängig vom Parameter x sind die mittels elektrochemischer Messung an der offenen Halbzelle gemessenen Kapazitäten von ca. 300 mA/g (Messbedingungen: Kompaktieren der Legierung mit Ni-Pulver, Elektrolyt KOH mit ρ=1,3 g/cm³, Ladung und Entladung mit 100 mA/g, Entladeschlußspannung -700 mV gegen Hg/HgO, Temperatur 25°C).

### Vergleichsbeispiele 2 e), f)

Legierungen der Zusammensetzungen e) =Mm Ni_{3,8} Co_{0,3} Al_{0,4} Mn_{0,3} Fe_{0,2} und f) =Mm Ni_{3,8} Co_{0,3} Al_{0,4} Mn_{0,3} Cu_{0,2} wurden in der Weise hergestellt, daß Schmelzen der angegebenen Zusammensetzung sprühverdüst und die so erhaltenen kugelförmigen Teilchen mit einer Korngröße <125 µm ausgesiebt sowie anschließend drei Stunden bei 800°C im Vakuumofen getempert wurden. Die Proben wurden vor ihrem Einsatz gemahlen.

### Beispiel 1 A)

Die Legierung Mm_{0,97} Zr_{0,03} Ni₄ Co_{0,3} Al_{0,4} Mn_{0,3} wurde hergestellt, indem eine die einzelnen Elemente im angegebenen Verhältnis enthaltende Schmelze abgegossen wurde. Das Produkt wurde bei 1000°C im Vakuumofen getempert und anschließend feingemahlen. Teilchen mit einer Korngröße <75 µm wurden ausgesiebt.

### Beispiel 1 B)

Die Herstellung der Legierung gemäß Beispiel 1 A) wurde wiederholt mit dem Unterschied, daß die Schmelze die Zusammensetzung Mm_{0,97} Ti_{0,03} Ni₄ Co_{0,3} Al_{0,4} Mn_{0,3} hatte.

### Beispiel 2 C)

Eine Schmelze mit der Zusammensetzung gemäß Beispiel 1 A) wurde sprühverdüst und die so erhaltenen kugelförmigen Teilchen mit einer Korngröße <125 µm ausgesiebt. Anschließend wurde diese Legierung drei Stunden bei 800°C im Vakuumofen getempert sowie danach gemahlen.

### Beispiel 2 D)

Eine Legierung mit der im Beispiel 1 B) angegebenen Zusammensetzung wurde unter den im Beispiel 2 C) angegebenen Bedingungen hergestellt.

Die gemäß den Beispielen 1 A) und B) sowie 2 C) und D) hergestellten Legierungen sowie die Legierungen gemäß der Vergleichsbeispiele 1 und 2 wurden in AA-Zellen als aktive Materialien in negativen Elektroden eingesetzt. Alle AA-Zellen wurden in der nachfolgend angegebenen Weise gefertigt und behandelt:
Negative Elektrode - Walzelektrode, Legierung + Binder + Kohlenstoff auf ein Ni-Lochblech gewalzt;
Positive Elektrode - Ni-Schaum-Elektrode, Einpastieren von Nickelhydroxid in ein Ni-Schaum-Gerüst (Paste - 90% Nickelhydroxid + 10% Kobaltoxid + Binder + Wasser);
Scheider - handelsüblicher Typ wie Polyamidvlies;
Elektrolyt - (6,5 molare KOH + 0,5 molare LiOH) Lösung in einer Dosierung von 2,1 ml je Zelle; Inbetriebsetzung - 1x (Laden 15 Stunden mit 0,1 C, Lagerung über 24 Stunden bei 60°C, Entladen mit 0,2 C bis zu einer Entladeschlußspannung von 1,0 Volt) und 3x (Laden 7 Stunden mit 0,2 C, einer Pause von 0,25 Stunden und einer Entladung mit 0,2 C bis zu einer Entladeschlußspannung von 0,9 Volt).

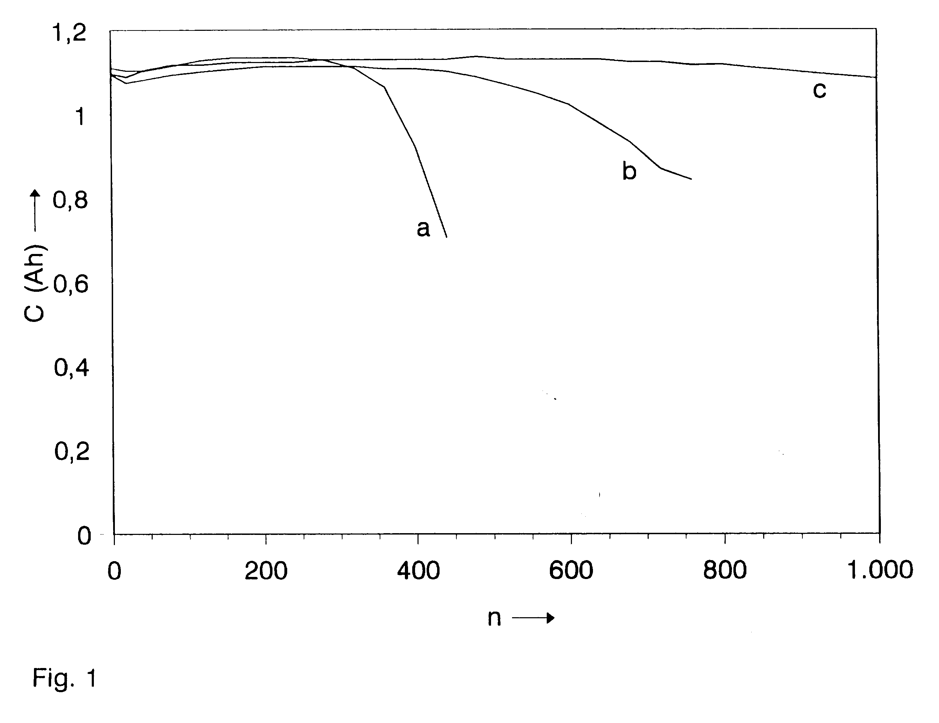

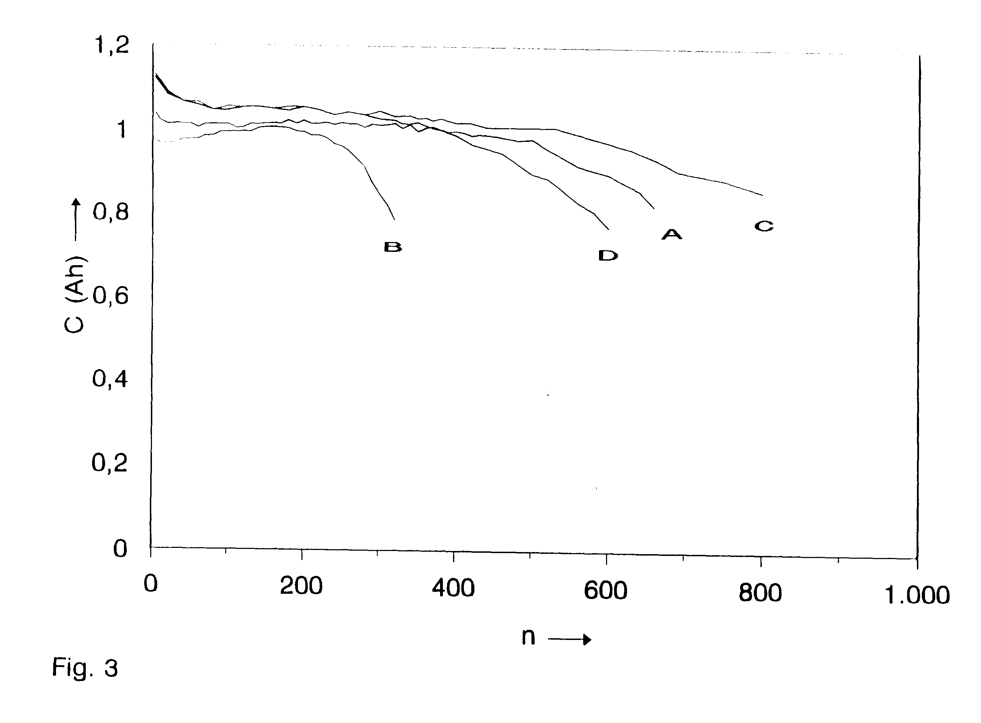

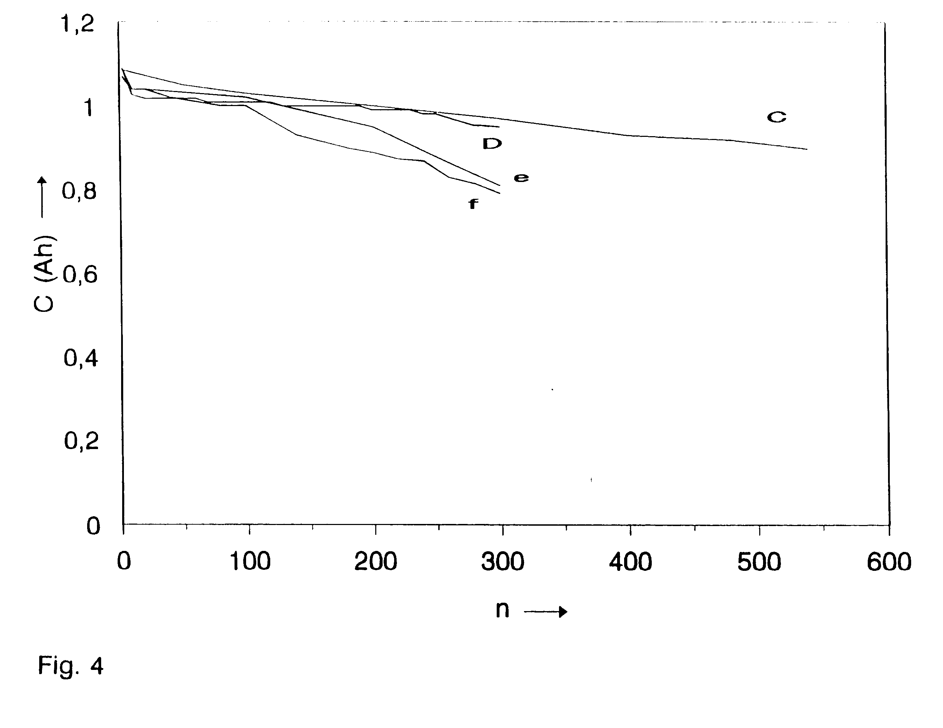

Die Figur 3 zeigt, daß die erfindungsgemäßen Legierungen eine gegenüber den in Figur 1 dargestellten Vergleichsbeispielen ähnlich hohe Zyklenstabilität aufweisen, wobei die Hochtemperatur-Zyklenstabilität der erfindungsgemäßen Legierungen gegenüber den Legierungen gemäß Vergleichsbeispiel 2 (s. europäische Anmeldung EP-A 736 919) eine verbesserte Hochtemperatur-Zyklenstabilität aufweisen, wie in Figur 4 zu erkennen ist. Während mit den Vergleichslegierungen nach ca. 300 Zyklen die Entladeschlußspannung von ca 0,8 V erreicht wurde, konnten mit den erfindungsgemäßen Legierungen bis zu 550 Zyklen bis zum Erreichen der Entladeschlußspannung absolviert werden.

## Patentansprüche

1. Legierung für die Verwendung als aktives Material für die negative Elektrode einer alkalischen, wiederaufladbaren Nickel-Metallhydrid-Batterie, dadurch gekennzeichnet, daß ihre Zusammensetzung der Formel
Mm₁₋ᵤEᵤNiᵥCo_{w}AlₓMn_{y}M_{z}
entspricht, wobei Mm = La und Ce sowie Pr, Nd und/oder weitere Lanthanide sind und für E = Ti und/oder Zr mit 0,01 ≤ u ≤ 0,1,
M = Fe und/oder Cu mit 0 ≤ z ≤ 0,4 sowie
0,2 ≤ w ≤ 0,4
0,3 ≤ x ≤ 0,5,
0,2 ≤ y ≤ 0,4 und
4,9 ≤ v + w + x + y + z ≤ 5,1 gilt.

2. Legierung nach Anspruch 1, dadurch gekennzeichnet, daß das Mischmetall Mm 25 bis 60 Gew.-% La und 20 - 50 Gew.-% Ce sowie als Rest weitere Lanthanide enthält.

3. Legierung nach Anspruch 1 oder 2, dadurch gekennzeichnet, daß bei gleichzeitigem Vorhandensein von Fe und Cu das Verhältnis von Fe/Cu im Bereich von 0,5 ≤ Fe/Cu ≤ 2 liegt.

4. Legierung nach Anspruch 1 oder 2, dadurch gekennzeichnet, daß bei gleichzeitigem Vorhandensein von Zr und Ti das Verhältnis von Zr/Ti im Bereich von 2 ≤ Zr/Ti ≤ 3 liegt.

5. Legierung nach Anspruch 1 oder 2, dadurch gekennzeichnet, daß die Legierung die Zusammensetzung Mm_{0,97}Ti_{0,03}Ni₄Co_{0,3}Al_{0,4}Mn_{0,3} oder Mm_{0,97}Zr_{0,03}Ni₄Co_{0,3}Al_{0,4}Mn_{0,3} hat.

6. Verfahren zur Herstellung einer Legierung gemäß einem oder mehreren der Ansprüche 1 - 5, dadurch gekennzeichnet, daß die geschmolzene Legierung sprühverdüst, anschließend getempert und danach gemahlen wird.

## Claims

1. Alloy for use as an active material for the negative electrode of an alkaline, rechargeable nickelmetal hydride battery, characterized in that its composition corresponds to the formula
Mm₁₋ᵤEᵤNiᵥCO_{w}AlₓMn_{y}M_{z},
where Mm = La and Ce and Pr, Nd and/or further lanthanides and if E = Ti and/or Zr with 0.01 ≤ u ≤ 0.1,
M = Fe and/or Cu with 0 ≤ z ≤ 0.4 and
0.2 ≤ w ≤ 0.4,
0.3 ≤ x ≤ 0.5,
0.2 ≤ y ≤ 0.4 and
4.9 ≤ v + w + x + y + z ≤ 5.1.

2. Alloy according to Claim 1, characterized in that the misch metal Mm comprises from 25 to 60 wt% of La and 20 - 50 wt% of Ce, the remainder being further lanthanides.

3. Alloy according to Claim 1 or 2, characterized in that in the event of Fe and Cu being present simultaneously, the ratio of Fe/Cu is in the range of 0.5 ≤ Fe/Cu ≤ 2.

4. Alloy according to Claim 1 or 2, characterized in that in the event of Zr and Ti being present simultaneously, the ratio of Zr/Ti is in the range of 2 ≤ Zr/Ti ≤ 3.

5. Alloy according to Claim 1 or 2, characterized in that the alloy has the composition Mm_{0.97}Ti_{0.03}Ni₄Co_{0.3}-Al_{0.4}Mn_{0.3} or Mm_{0.97}Zr_{0.03}Ni₄CO_{0.3}Al_{0.4}Mn_{0.3}.

6. Method for preparing an alloy according to one or more of Claims 1 - 5, characterized in that the molten alloy is atomized, then annealed and subsequently ground.

## Revendications

1. Alliage pour l'utilisation comme matériau actif pour l'électrode négative d'une batterie alcaline, rechargeable au nickel-hydrure de métal,
caractérisé en ce que
sa composition correspond à la formule
Mm₁₋ᵤEᵤNiᵥCo_{w}AlₓMn_{y}M_{z}
dans laquelle sont
Mm = La et Ce ainsi que Pr, Nd et/ou d'autres lanthanides et sont valables pour
E = Ti et/ou Zr avec 0,01 ≤ u ≤ 0,1
M = Fe et/ou Cu avec 0 ≤ z ≤ 0,4 ainsi que
0,2 ≤ w ≤ 0,4
0,3 ≤ x ≤ 0,5
0,2 ≤ y ≤ 0,4 et
4,9 ≤ v + w + x + y + z ≤ 5,1.

2. Alliage selon la revendication 1,
caractérisé en ce que
le métal mixte Mm contient de 25 à 60 % en poids de La et de 20 à 50 % en poids de Ce ainsi que comme radical d'autres lanthanides.

3. Alliage selon les revendications 1 ou 2,
caractérisé en ce que
lors de l'existence simultanée de Fe et Cu le rapport de Fe/Cu se situe dans l'intervalle 0,5 ≤ Fe/Cu ≤ 2.

4. Alliage selon les revendications 1 ou 2,
caractérisé en ce que
lors de l'existence simultanée de Zr et de Ti, le rapport de Zr/Ti se situe dans l'intervalle 2 ≤ Zr/Ti ≤ 3.

5. Alliage selon la revendication 1 ou 2,
caractérisé en ce que
l'alliage a la composition
Mm_{0,97}Ti_{0,03}Ni₄Co_{0,3}Al_{0,4}Mn_{0,3}
ou
Mm_{0,97}Zr_{0,03}Ni₄Co_{0,3}Al_{0,4}Mn_{0,3}·

6. Procédé de fabrication d'un alliage selon une ou plusieurs des revendications 1-5,
caractérisé en ce que
l'alliage fondu est diffusé par pulvérisation, ensuite recuit et puis est moulu.
